# EUROPÄISCHE PATENTSCHRIFT

(11) **EP 3 335 300 B1**
(45) Veröffentlichungstag und Bekanntmachung des Hinweises auf die Patenterteilung: **21.10.2020**
(21) Anmeldenummer: 16750849.8
(22) Anmeldetag: 12.08.2016
(51) Int. Cl.: H02K 1/24, H02K 15/02

(54) **ROTORPAKET FÜR EINE SYNCHRONRELUKTANZMASCHINE**
ROTOR STACK FOR A SYNCHRONOUS RELUCTANCE MACHINE
EMPILAGE DE ROTOR POUR UNE MACHINE À RÉLUCTANCE SYNCHRONE

(30) Priorität: 14.08.2015 DE 102015215585
(43) Veröffentlichungstag der Anmeldung: 20.06.2018
(73) Patentinhaber: KSB SE & Co. KGaA, 67227 Frankenthal (DE)
(72) Erfinder: SCHAAB, Jochen, 67227 Frankenthal (DE)
(86) Internationale Anmeldenummer: PCT/EP2016/069238
(87) Internationale Veröffentlichungsnummer: WO 2017/029216

(56) Entgegenhaltungen:
- EP-A1- 2 406 870
- EP-A2- 2 506 271
- DE-C- 690 541
- JP-A- 2002 095 227
- JP-A- 2015 082 911

## Beschreibung

Die Erfindung betrifft ein Rotorpaket für eine Sychronreluktanzmaschine bestehend aus einer Vielzahl an gestapelten Blechschnitten mit Flusssperren zur Ausbildung ausgeprägter Rotorpole, wobei aufeinander liegende Flusssperren benachbarter Blechschnitte eine in axialer Rotorrichtung durchgehende Ausnehmung bilden.

Sychronreluktanzmotoren besitzen einen Rotor aus einem gestapelten Blechpaket. Die einzelnen Blechschnitte umfassen einen Flusssperrenschnitt, um im Motorbetrieb eine Ausprägung magnetischer Pole zu fördern. In der Regel sind die gestapelten Bleche identisch und werden deckungsgleich gestapelt, so dass die aufeinanderliegenden Flusssperren eine in Axialrichtung durchgehende Öffnung durch das Rotorpaket bilden.

Für das Verhalten der Maschine ist das Reluktanzverhältnis zwischen d- und q-Achse der Rotorgeometrie entscheidend. Aus Stabilitätsgründen sind innere und äußere Rippen nötig um die quer zur y-Achse orientierten Flussleitflächen zu tragen. Um eine möglichst große magnetische Anisotropie zu erreichen, wird stets versucht, diese Rippen soweit wie möglich zu minimieren. Dazu werden die Rippen möglichst dünn ausgelegt, gerade so, dass die mechanische Festigkeit des Rotors noch gegeben ist.

Bei Anwendungen mit hohen Leistungsdichten werden schneit drehende Motoren eingesetzt, beispielsweise mit einer Drehzahl von 14.000 Umdrehungen pro Minute gegenüber maximal 4.200 Umdrehungen pro Minute bei Industrieantrieben. Die hohe Drehzahl erzeugt enorme Fliehkräfte, die ein stabiles Rotorgefüge verlangen. Dazu müssen die Rippen verbreitert werden, um den Fliehkräften standzuhalten. Die Verbreitung der Rippen führt jedoch zu einer unerwünschten magnetischen Leitfähigkeit in q-Richtung, was die Drehmomentausbeute der Maschine beeinträchtigt.

In der Vergangenheit ist man zur Überwindung dieses Problems bereits dazu übergegangen, die sich bei der Stapelung ergebenden axialen Durchgänge aufeinander liegender Flusssperren mit einem passenden Füllmaterial auszufüllen. Das eingebrachte Füllmaterial wirkt als Trägermaterial und verleiht dem Rotorpaket eine zusätzliche Stabilität.

Beim Einbringen des Füllmaterials entsteht eine Verbindung der einzelnen Flussleitflächen mit dem Füllmaterial. Die Kontaktfläche zwischen Flussleitflächen und Füllmaterial ist allerdings konstruktionsbedingt sehr gering. Zudem wird die vorliegende Kontaktfläche im Motorbetrieb rein auf Zug beansprucht. Die durch Adhäsion übertragbaren Kräfte sind in diesem Fall sehr gering.

Die JP 2002 095227 A zeigt ein Rotorpaket für eine Synchronreluktanzmaschine gemäß dem Oberbegriff des Anspruchs 1.

Die EP 2 506 271 A2, die DE 690 541 C, die JP 2015 082911 A sowie die EP 2 406 870 A1 zeigen weitere Rotorpakete für elektrische Maschinen.

Die vorliegende Erfindung setzt sich zur Aufgabe, die Rotorstabilität im Betrieb mit hohen Drehzahlen zu erhöhen ohne im Gegenzug eine Beeinträchtigung des Wirkungsgrades in Kauf nehmen zu müssen.

Gelöst wird diese Aufgabe durch ein Rotorpaket gemäß den Merkmalen des Anspruchs 1. Vorteilhafte Ausgestaltungen des Rotorpakets sind Gegenstand der sich an den Hauptanspruch anschließenden abhängigen Ansprüche.

Gelöst wird die Aufgabe demnach durch ein Rotorpaket für eine Sychronreluktanzmaschine, das aus einer Vielzahl an gestapelten Blechschnitten mit Flusssperren zur Ausbildung ausgeprägter Rotorpole besteht. Einige Flusssperren liegen aufeinander, wodurch sich in axialer Richtung des Rotors ein Durchgang ergibt. Bisher lagen die Flusssperren benachbarter Rotorschnitte deckungsgleich aufeinander, d.h. die Flusssperrenränder aufeinander liegender Flusssperren bildeten eine in Axialrichtung ebene Innenwandung.

Erfindungsgemäß wird nun dazu übergegangen, zumindest einen Teil der aufeinander liegenden Flusssperren von zumindest zwei benachbarten Blechschnitten sich zumindest bereichsweise überlappend anzuordnen. Damit ergibt sich kein ebener Verlauf der Innenwandung, sondern die Überlappung der Flusssperren führt zu einem stufenförmigen Verlauf der resultierenden Innenwandung aufeinander liegender Flusssperren in Axialrichtung. Dadurch wird die zur Verfügung stehende Wandungsfläche vergrößert, was insbesondere dann von Vorteil ist, wenn ein Füllmaterial in die Flusssperren eingebracht ist. Folglich erhöht sich die Kontaktfläche zwischen den an die Flusssperre angrenzenden Flussleitabschnitten des Blechschnitts und dem eingebrachten Füllmaterial. Darüber hinaus entstehen neue Bereiche, welche im Motorbetrieb durch Scherkräfte belastet werden können. Der resultierende Rotorverbund wird erheblich gestärkt. Der Rotor kann so höhere Drehzahlen aushalten, da die Übertragung der Fliehkräfte nicht mehr allein durch innere und äußere Rippen erfolgen muss.

Als überlappende Anordnung werden Flusssperren verstanden, die nicht vollständig deckungsgleich aufeinander liegen, sondern deren Randbereiche sich zumindest teilweise überlappen.

Idealerweise ist pro Polsegment der Rotorgeometrie wenigstens eine entsprechende überlappende Anordnung von Flusssperren vorgesehen. Besser ist es jedoch, wenn Flusssperren eines jeden Polsegmentes der Blechschnittgeometrie eine überlappende Anordnung vorsehen, was die Stabilität des Rotorpaketes deutlich erhöht.

Die überlappende Anordnung der Flusssperren kann durch eine Variation der Flusssperrengröße sowie Flusssperrenform und/oder durch eine Verschiebung wenigstens einer Flusssperre auf dem Rotorblechschnitt erzielt werden. Denkbar ist es, dass die Form und/oder Größe wenigstens einer Flusssperre zu wenigstens einer benachbarten Flusssperre verzerrt ist.

Es ist ebenfalls denkbar, dass die aufeinander liegenden Flusssperren eine identische Form und Größe aufweisen, jedoch beim Vergleich benachbarter Blechschnitte versetzt zueinander verlaufen, sodass sich diese gegenseitig an bestimmten Bereichen überlappen. Denkbar kann selbstverständlich auch eine Überlappung über den vollständigen Verlauf der Flusssperren, d.h. über deren gesamte Länge, sein.

Die geometrische Formgebung einzelner Flusssperren kann aus einem quer zur q-Achse verlaufenden Mittelteil, insbesondere geradlinig verlaufenden Mittelteil, und/oder endseitig am Mittelteil angeordnete und dazu abgewinkelte Enden bestehen. Die Enden müssen nicht spitz abgewinkelt sein, ein runder Übergang vom Mittelteil in die abgewinkelten Enden ist ebenso vorstellbar.

Für die Überlappung ist es prinzipiell ausreichend, wenn erfindungsgemäß die Mittelteile benachbarter Flusssperren in radialer Richtung zueinander versetzt liegen. Erfindungsgemäß liegen die Enden weiterhin deckungsgleich aufeinander, insbesondere die abgewinkelten Enden, auch als Schenkel bezeichnet, aufeinander.

Besonders bevorzugt ist es, wenn zwischen jeweils zwei Blechschnitten mit deckungsgleich aufeinanderliegenden Flusssperren wenigstens ein Blechschnitt mit dazu versetztem Flusssperrenverlauf liegt, so dass zwischen den beiden äußeren Flusssperren und der dazwischen liegenden Flusssperren eine identische Überlappung auftritt. Im Ganzen ergibt sich eine gleichmäßige Rotorstruktur und der durch die Unterschiede in der Blechschnittgeometrie bedingte Einfluss auf den Rotorrundlauf wird minimiert.

Es besteht die Möglichkeit, dass das Paket zumindest teilweise aus identischen Blechschnitten gestapelt ist, wobei die Flusssperren unmittelbar benachbarter Polsegmente eines jeden Blechschnitts mit unterschiedlichem Radialabstand zur Wellenbohrung angeordnet sind. Benachbarte Blechschnitte sind dann um ein Polsegment zueinander verdreht gestapelt, so dass sich zumindest ein Teil der aufeinander liegenden Flusssperren überlappen. Es können beispielsweise die inneren Flusssperren benachbarter Rotorpole zueinander versetzt angeordnet sein. Gleiches gilt für die äußeren als auch die mittleren Flusssperren. Grundsätzlich können auch alle Flusssperren eines Rotorpols versetzt zu den Flusssperren eines benachbarten Rotorpols angeordnet sein. Der Versatz bezieht sich immer auf zwei korrespondierende Flusssperren benachbarter Polsegmente, d.h. die inneren, eine der mittleren bzw. die äußeren Flusssperren.

Es müssen nicht zwingend die Flusssperren unmittelbar benachbarter Polsegmente mit unterschiedlichem Radialabstand zur Wellenbohrung angeordnet sein. Möglich ist auch, dass die Flusssperren eines Polsegmentes und eines übernächsten Polsegmentes oder eines dem übernächsten Polsegment nachfolgenden Polsegmentes unterschiedliche Radialabstände zur Wellenbohrung aufweisen. Genauso können auch gegenüberliegende Polsegmente Flusssperren mit unterschiedlichem Radialabstand zur Wellenbohrung aufweisen. Beim anschließenden Verdrehen der Blechschnitte für die Stapelung ist darauf zu achten, dass benachbarte Blechschnitte soweit verdreht werden, dass Polsegmente mit zueinander versetzten Flusssperren aufeinander liegen. Die Verdrehung erfolgt also zumindest um mindestens zwei Polsegmente.

Bevorzugterweise sind Flusssperren aller unmittelbar zueinander benachbarten Polsegmente mit abweichendem Versatz zur Wellenbohrung platziert. Selbiges kann auch bei der zuvor genannten alternativen Ausgestaltung, bei der nicht die Flusssperren unmittelbar benachbarter Polsegmente einen Versatz aufweisen, sinnvoll sein. Der Einfachheit halber wird jedoch im Folgenden nur Bezug zum Beispiel mit einem Versatz der Flusssperren unmittelbar benachbarter Polsegmente genommen, die Ausführungen gelten jedoch ohne Einschränkungen auch für die Alternative.

Beispielsweise kann die entsprechende Flusssperre des benachbarten Polsegmentes eines ersten Pols mit geringerem Abstand zur Wellenbohrung angeordnet sein, während dessen unmittelbar benachbarte Flusssperre des benachbarten Polsegmentes wiederum mit größerem Abstand zur Wellenbohrung angeordnet ist. In diesem Fall kann es sinnvoll sein, wenn die Flusssperren benachbarter Polsegmente unterschiedliche Abstände zur Wellenbohrung aufweisen, jedoch die Flusssperre des übernächsten Polsegmentes einer Flusssperre eines ersten Polsegmentes mit identischem Abstand zur Wellenbohrung platziert ist. Geht man die Flusssperren im Umfang des Blechschnittes über die einzelnen Polsegmente ab, so sind die jeweiligen Flusssperren alternierend mit größerem bzw. kleinerem Abstand zur Wellenbohrung platziert.

Bei der anschließenden Stapelung dieser Blechschnitte werden diese zueinander verdreht um jeweils ein Polsegment aufeinander platziert, wodurch sich eine überlappende Anordnung der Flusssperren ergibt.

Wie bereits vorstehend beschrieben, können die resultierenden in axialer Richtung durchgehenden Ausnehmungen des Rotorpaketes mit einem entsprechenden Füllmedium teilweise oder vollständig befüllt sein, beispielsweise mit einem diamagnetischen oder paramagnetischen Material. Vorteilhaft ist die Einbringung des Materials mittels Spritzguss- bzw. Druckgussverfahrens. Besonders vorteilhaft kann die Einbringung des Materials per Thixomolding erfolgen. Besonders geeignet ist die Verwendung von Aluminium als Füllmaterial bzw. von einem Füllmaterial, das Aluminium umfasst.

Denkbar ist es, dass zumindest ein Teil der Blechschnitte eine oder mehrere Bohrungen in mindestens einem Flussleitabschnitt umfassen. Auch die Bohrungen können, vergleicht man benachbarte Polsegmente, versetzt zueinander angeordnet sein. Insbesondere sind die Bohrungen derart angeordnet, dass sich die Bohrungen innerhalb der Flussleitabschnitte eines Blechschnittes in die Flusssperre des benachbarten Blechschnittes erstrecken. Die Bohrungen können ebenfalls mit einem Füllmaterial ausgefüllt sein, vorzugsweise demselben Material wie die aufeinander liegenden Flusssperren. Die Füllung der Bohrungen verleiht dem Rotorpaket zusätzliche Stabilität. Diese Vorgehensweise ist insbesondere dann von Vorteil, wenn eine Blechschnittgeometrie mit möglichst wenigen bzw. keinen Rippen, d. h. ohne inneren oder äußeren Rippen, verlangt ist. Die Reduzierung der Rippenzahl bzw. das vollständige Weglassen der Rippen optimiert das Reluktanzverhältnis zwischen d- und q-Achse, wobei aufgrund der Bohrungen dennoch für ausreichende Stabilität des Rotorpaketes gesorgt wird.

Der erfindungsgemäße Gedanke ermöglicht den Aufbau eines Rotors, der ohne zusätzliche Fixierungs-, Distanz- oder Endscheiben auskommt. Die Stabilität wird allein durch die überlappende Anordnung der Flusssperren und die nachfolgende Verfüllung dieser erreicht. Es spricht jedoch nichts dagegen, die Rotorgeometrie um einen Anlaufkäfig mit entsprechenden Kurzschlussringen zu ergänzen, insbesondere auf Basis des in die Flusssperren eingebrachten Aluminiums. Der Rotor eignet sich dann zum Einsatz innerhalb einer Line-Start Synchronreluktanzmaschine.

Neben dem erfindungsgemäßen Rotorpaket betrifft die vorliegende Erfindung ebenfalls eine Sychronreluktanzmaschine mit einem derartigen Rotorpaket. Damit ergeben sich für die Sychronreluktanzmaschine offensichtlich dieselben Vorteile und Eigenschaften, wie sie bereits anhand des erfindungsgemäßen Rotorpaketes erläutert wurden.

Bevorzugt ist eine Ausführung der Sychronreluktanzmaschine, bei der auf einen Stator in Einzelspulenwicklung zurückgegriffen wird. Es kann jedoch auch ein Stator mit verteilter Wicklung eingesetzt werden.

Zuletzt betrifft die vorliegende Erfindung ebenfalls ein Verfahren zur Herstellung eines Rotorpaketes, vorzugsweise gemäß der vorliegenden Erfindung. Das Verfahren zeichnet sich dadurch aus, dass einzelne Blechschnitte aus einem elektromagnetischen Blech geschnitten bzw. gestanzt werden, wobei korrespondierende Flusssperren benachbarter Polsegmente in alternierender radialer Richtung zueinander versetzt sind. Dies betrifft unmittelbar benachbarte Polsegmente als auch nachfolgende Polsegmente bzw. gegenüberliegende Polsegmente. Dadurch verlaufen die jeweiligen Flusssperren dieser Polsegmente mit unterschiedlichem Radialabstand zur Wellenbohrung. Beim nachfolgenden Fügen werden die einzelnen Blechschnitte um ein oder mehrere Polsegmente gegenüber dem vorhergehenden Blechschnitt des Rotorpaketes verdreht angeordnet, sodass die korrespondierenden Flusssperren nicht mehr deckungsgleich aufeinander liegen, sondern sich teilweise überlappen. Durch die Überlappung der aufeinander liegenden Flusssperren ergibt sich eine vergrößerte Kontaktfläche zwischen einem eingefüllten Füllmaterial und den Flussleitabschnitten.

Die Einbringung des Füllmaterials in die jeweiligen Flusssperren erfolgt vorzugsweise per Druckgussverfahren, wobei als Füllmaterial idealerweise ein Aluminium bzw. ein Aluminium umfassendes Material zum Einsatz kommt. Besonders bevorzugt kann die Einbringung des Füllmaterials per Thixomolding erfolgen. Dieses Verfahren zeichnet sich durch die sehr guten Fließeigenschaften des Füllmaterials aus, weshalb sich das Verfahren insbesondere für die Befüllung der Flusssperren, insbesondere für die Befüllung der sich überlappenden Flusssperren und den damit einhergehenden feinen Oberflächenstrukturen, eignet.

Ein oder mehrere Flussleitabschnitte ein oder mehrerer Polsegmente sind optional mit Bohrungen versehen, in die ebenfalls das verwendete Füllmaterial eingebracht wird. Auch die Bohrungen können, vergleicht man benachbarte Polsegmente miteinander, versetzt zueinander angeordnet sein. Insbesondere sind die Bohrungen derart angeordnet, dass sich die Bohrungen innerhalb der Flussleitabschnitte eines Blechschnittes in die Flusssperre des benachbarten Blechschnittes erstreckt. Dadurch lassen sich benachbarte Flussleitabschnitte in Axialrichtung unmittelbar mit dem Füllmaterial verbinden, was die Stabilität des Rotors positiv beeinflusst.

Weitere Vorteile und Eigenschaften der Erfindung sollen im Folgenden anhand eines in den Zeichnungen dargestellten Ausführungsbeispiels wiedergegeben werden. Es zeigen:
- Fig. 1:: eine Darstellung des erfindungsgemäßen Blechschnittes im Vergleich zu einem konventionellen Rotorblech,
- Fig. 2:: eine Darstellung des erfindungsgemäßen Blechschnittes gemäß einer zweiten Ausführungsform,
- Fig. 3:: eine skizzierte Darstellung eines gestapelten Rotorpaketes aus erfindungsgemäßen Blechschnitten gemäß Figur 1 und
- Fig. 4:: eine skizzierte Darstellung eines gestapelten Rotorpaketes aus erfindungsgemäßen Blechschnitten gemäß Figur 2.

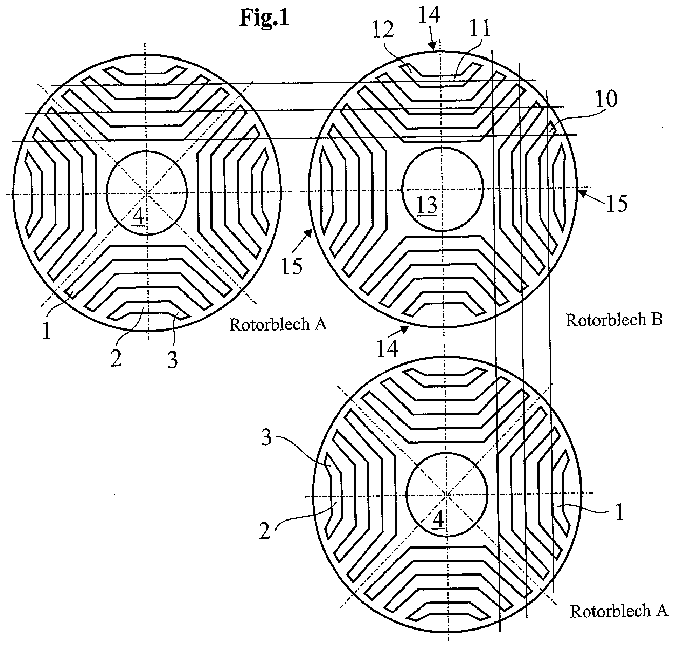

Fig. 1 zeigt insgesamt drei Blechschnitte eines Rotorpaketes, wobei das Rotorblech A ein konventionelles Rotorblech darstellt, während Rotorblech B die Geometrie eines erfindungsgemäßen Blechschnittes zeigt. Zum besseren Verständnis der modifizierten Flusssperrenanordnung sind die unterschiedlichen Geometrien neben- sowie untereinander dargestellt.

Beide Blechschnittgeometrien A, B bestehen aus einem elektromagnetischen Blech, das mit einer Vielzahl an Flusssperren 1, 10 versehen ist. Beide Geometrien sind nahezu identisch, lediglich die Anordnung der Flusssperren 10 ist in der neuartigen Geometrie gemäß dem Blech B leicht radial versetzt angeordnet.

Beide Rotorgeometrien A, B bilden durch die gezielte Anordnung der Flusssperren 1, 10 in entsprechenden Polsegmenten einen vierpoligen Rotor. Einzelne Polsegmente umfassen jeweils drei Flusssperren 1, 10, die aus einem Mittelteil 2, 11 sowie daran endseitig angewinkelten Enden 3, 12 bestehen. Die in Radialrichtung am nächsten an der Wellenbohrung 4, 13 liegende Flusssperre weist die größte geometrische Abmessung auf, während die in Radialrichtung weiter außen liegenden Flusssperren zunehmend kleiner dimensioniert sind.

Gemäß der vorliegenden Erfindung wird der Flusssperrenschnitt so variiert, dass die Mittelteile 11 der Flusssperren 10 eines Polsegmentes in radialer Richtung abwechselnd verschoben sind. Alle Flusssperren 10 von je zwei Polsegmenten 15 werden radial nach außen verschoben, bei den beiden übrigen Polsegmenten 14 werden alle Flusssperren 10 nach innen verschoben. Die Lage der Enden 12 der Flusssperren bleibt unverändert gegenüber der heutigen Ausführung gemäß Blechschnitt A.

Zu sehen ist beispielsweise, dass die Flusssperren 10 des oberen und unteren Polsegmentes 14 des Rotorblechs B gegenüber dem konventionellen Rotorblech A in radialer Richtung näher an der Wellenbohrung 13 liegen. Demgegenüber sind die Flusssperren 10 des rechts und links liegenden Polsegmentes 15 gegenüber dem konventionellen Rotorblech A in radialer Richtung weiter zur Wellenbohrung 13 beabstandet. Die Verschiebung der Flusssperren der Polsegmente 15 nach innen führt zu einer Verzerrung der Flusssperrenform gegenüber der ursprünglichen Flusssperrenform gemäß Blechschnitt A, während die Verschiebung der Flusssperren der Polsegmente 14 nach außen zur Stauchung führt. Die Position der Enden, d.h. der Enden der beiden Schenkel auf dem Blechschnitt B ändert sich jedoch nicht.

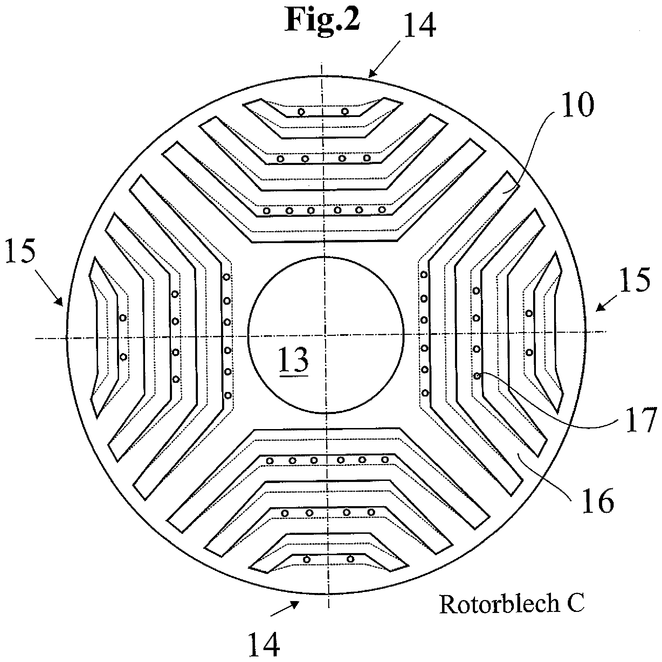

Eine abweichende Ausführungsform des erfindungsgemäßen Rotorblechs ist in Fig. 2 als Rotorblech C dargestellt. Die Anordnung der Flusssperren 10 ist dabei identisch zu der Anordnung gemäß dem Rotorblech B der Fig. 1. Abweichend dazu sind lediglich die Flussleitabschnitte 16, d. h. die Abschnitte des elektromagnetischen Bleches zwischen den einzelnen Flusssperren 10, mit Haltelöchern 17 versehen.
Die Haltelöcher 17, auch als Bohrungen bezeichnet, sind für benachbarte Polsegmente ebenfalls versetzt zueinander angeordnet. Im Polsegment 14 liegen diese beispielsweise am äußeren Grenzrand der Mittelteile der einzelnen Flusssperren 10, während die Bohrungen 17 im Polsegment 15 demgegenüber am inneren Grenzrand der Mittelteile 11 der Flusssperren 10 liegen. Die Bohrungen 17 sind folglich ebenfalls in Radialrichtung versetzt angeordnet. Die Funktion dieser Haltelöcher 17 wird zu einem späteren Zeitpunkt näher erläutert.

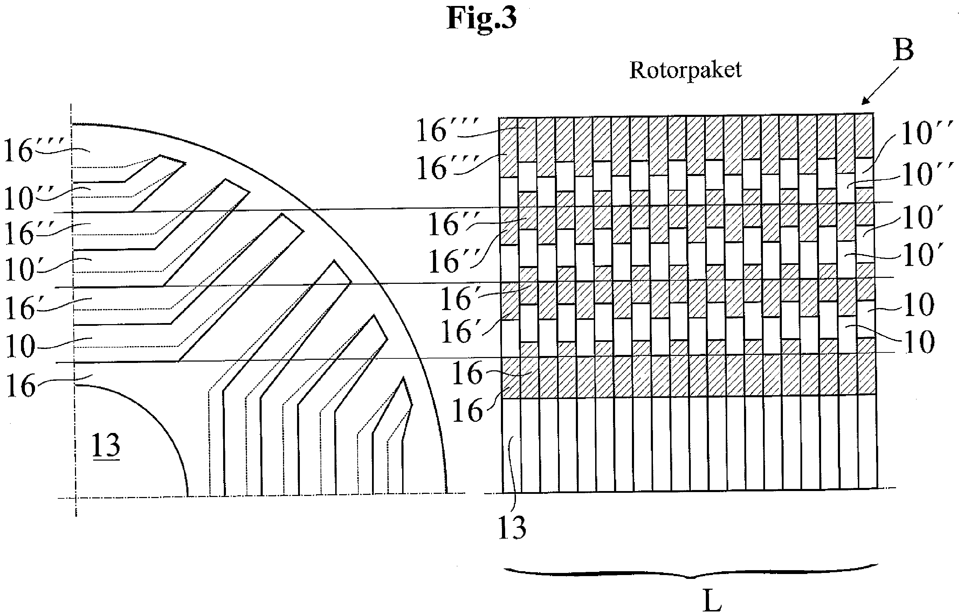

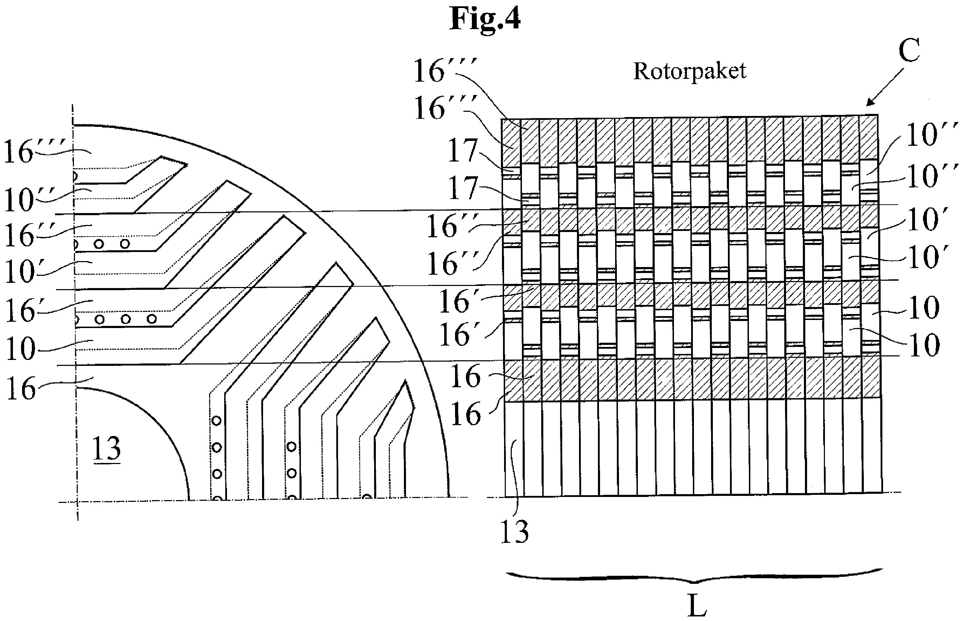

Nach dem Stanzen der Blechschnitte B, C werden diese beim nachfolgenden Fügen um 90° gegenüber dem vorhergehenden Blech verdreht gestapelt. Dadurch entsteht im Inneren einer Flusssperre über die Rotorgesamtlänge hinweg ein Volumen mit stark vergrößerter Oberfläche, da die Überlappung der Flusssperren zu einem treppenartigen Verlauf der Innenwandung in Axialrichtung führt. Zu sehen ist dies beispielsweise in der Darstellung gemäß den Figuren 3 und 4. Die Variante gemäß Figur 3 zeigt die Verwendung von Blechschnitten gemäß der Geometrie B, während die Abbildung der Figur 4 auf Blechschnitte mit der Geometrie C zurückgreift. Erkennbar bei beiden Beispielen B, C ist hier, dass der Abstand der Flusssperren 10, 10', 10" zur Wellenbohrung 13 über die axiale Länge L variiert. Die gilt sowohl für die sich überlappenden innersten Flusssperren 10, die mittleren Flusssperren 10' sowie die äußeren Flusssperren 10'''.

Im gezeigten Ausführungsbeispiel hat jeder zweite Blechschnitt Flusssperren 10, 10', 10" mit identischem Abstand zur Wellenbohrung 13, wohingegen unmittelbar benachbarte Blechschnitte abweichende Abstände zur Wellenbohrung 13 aufweisen. Durch diese Vorgehensweise ergibt sich eine deutliche Oberflächenvergrößerung der Innenwandung der Flusssperren 10, 10', 10", die durch die angrenzenden Flussleitabschnitte 16, 16', 16", 16''' gebildet ist. Werden die Flusssperren 10, 10', 10" über die axiale Länge L mit einem Füllmaterial, z. B. per Aludruckguss, ausgefüllt, so entsteht eine Verbindung der einzelnen Flussleitflächen 16, 16', 16", 16''' mit dem Füllmaterial.

Beim Verguss eines konventionellen Rotors mit den Blechschnitten A wäre die Kontaktfläche zwischen Flussleitfläche und Vergussmaterial sehr gering und die resultierende Kontaktfläche würde rein auf Zug beansprucht. Die in diesem Fall durch Adhäsion übertragbaren Kräfte sind vergleichsweise gering. Bei der modifizierten Rotorvariante gemäß Fig. 3 ist die Kontaktfläche aufgrund des stufenförmigen Verlaufs stark vergrößert und es entstehen neue Bereiche, welche durch Scherkräfte belastet werden können, was den Verbund des Rotors deutlich stärkt. Der ausgefüllte Rotor kann so höhere Drehzahlen aushalten, da die Übertragung der Fliehkräfte nicht mehr allein durch die inneren und äußeren Rippen erfolgen muss.

Durch die Modifikation des Rotorbleches und den Ausguss ist es möglich auf die inneren und äußeren Rippen teilweise oder gegebenenfalls komplett zu verzichten.

Zudem benötigt das erfindungsgemäße Rotorpaket keine zusätzlichen Distanz- Fixierungs- oder Abschlussscheiben bzw. Kurzschlussringe zur Gewährleistung der Rotorstabilität. Es spricht jedoch nichts gegen die Einbringungen solcher Elemente, insbesondere dann, wenn das Rotorpaket in einem Line-Start Synchronreluktanzmotor eingesetzt werden soll und ein notwendiger Anlaufkäfig integriert wird.

Das vorliegende Rotorpaket kann mit einer unveränderten Einzelspulenwicklung aber auch mit verteilter Wicklung betrieben werden.

Bei der Verwendung der Blechschnittgeometrie C sind ebenfalls die Bohrungen 17 in den Flussleitabschnitten 16, 16', 16", 16''' zu erkennen. Die Bohrungen erstrecken sich in die Flusssperre 10 des benachbarten Blechschnittes C, so dass durch das Einfüllen des Füllmaterials die Flussleitabschnitte gleichzeitig mit der eingefüllten Trägersubstanz verbunden werden. Durch diese Bohrungen wird die Belastbarkeit des Rotors durch Fliehkräfte weiter erhöht.

Die Ausführungsbeispiele der Figuren 1 bis 4 offenbaren einen Versatz der Flusssperren benachbarter Polsegmente. Es besteht jedoch auch die Möglichkeit, die gegenüberliegenden Polsegmente mit einem entsprechenden Versatz der korrespondierenden Flusssperren auszustatten und beim nachfolgenden Stapeln benachbarte Blechschnitte um 180° zu verdrehen. Auch ist es nicht erforderlich, dass unmittelbar benachbarte Polsegmente den entsprechenden Versatz der Flusssperren aufweisen, der Versatz kann auch zwischen einem Polsegment und beispielsweise dem übernächsten bzw. einem diesem nachfolgenden Polsegment vorgesehen sein. Die Blechschnitte müssen in diesem Fall vor dem Stapeln um zwei oder mehrere Polsegmente zueinander verdreht werden, so dass die den Versatz aufweisenden Polsegemente schlussendlich übereinander liegen.

## Patentansprüche

1. Rotorpaket für eine Synchronreluktanzmaschine bestehend aus einer Vielzahl an gestapelten Blechschnitten (B, C) mit Flusssperren (10, 10', 10") zur Ausbildung ausgeprägter Rotorpole, wobei aufeinander liegende Flusssperren (10, 10', 10") benachbarter Blechschnitte eine in axialer Rotorrichtung durchgehende Ausnehmung bilden, wobei sich bei zumindest einem Teil der aufeinander liegenden Flusssperren (10, 10', 10") wenigstens zwei Flusssperren (10, 10', 10") benachbarter Blechschnitte (B, C) zumindest bereichsweise gegenseitig überlappen,
**dadurch gekennzeichnet, dass**
die einzelnen Flusssperren (10, 10', 10") ein quer zur q-Achse verlaufendes Mittelteil (11) und Enden (12), vorzugsweise dazu abgewinkelte Enden (12), umfassen, wobei die Mittelteile (11) aufeinander liegender Flusssperren (10, 10', 10") in radialer Richtung zueinander versetzt liegen, wobei die Enden (12) weiterhin deckungsgleich aufeinander liegen.

2. Rotorpaket nach Anspruch 1, **dadurch gekennzeichnet, dass** die aufeinander liegenden Flusssperren (10, 10', 10") in Form und Größe zueinander ähnlich sind, jedoch zumindest bereichsweise zueinander versetzt liegen, so dass sich diese gegenseitig überlappen, wobei insbesondere die Form und/oder Größe wenigstens einer Flusssperre (10, 10', 10") zu wenigstens einer benachbarten Flusssperre (10, 10', 10") verzerrt ist.

3. Rotorpaket nach einem der vorhergehenden Ansprüche, **dadurch gekennzeichnet, dass** jeweils zwischen zwei Blechschnitten (B, C) mit zwei deckungsgleich aufeinander liegenden Flusssperren (10, 10', 10") wenigstens ein Blechschnitt (B, C) mit dazu versetzter bzw. überlappender Anordnung der Flusssperre (10, 10', 10") liegt.

4. Rotorpaket nach einem der vorhergehenden Ansprüche, **dadurch gekennzeichnet, dass** zumindest pro Polsegment (14, 15) wenigstens eine überlappende Anordnung von Flusssperren (10, 10', 10") benachbarter Blechschnitte (B, C) vorgesehen ist, idealerweise sind Überlappungen bei allen aufeinander liegenden Flusssperren (10, 10', 10") eines Polsegmentes (14, 15) vorgesehen.

5. Rotorpaket nach einem der vorhergehenden Ansprüche, **dadurch gekennzeichnet, dass** das Paket zumindest teilweise aus identischen Blechschnitten (B, C) gestapelt ist, wobei die Flusssperren (10, 10', 10") benachbarter Polsegmente (14, 15) mit unterschiedlichem Radialabstand zur Wellenbohrung (13) angeordnet sind, insbesondere die Flusssperren (10, 10', 10") unmittelbar benachbarter Polsegmente (14, 15), und benachbarte Blechschnitte (B, C) um ein oder mehrere Polsegmente (14, 15) zueinander verdreht gestapelt sind.

6. Rotorpaket nach einem der vorhergehenden Ansprüche, **dadurch gekennzeichnet, dass** wenigstens eine durch die Flusssperren (10, 10', 10") gebildete in Axialrichtung durchgehende Ausnehmung zumindest bereichsweise mit einem diamagnetischen oder paramagnetischen Material gefüllt ist/sind.

7. Rotorpaket nach Anspruch 6, **dadurch gekennzeichnet, dass** das Material per Spritzguss bzw. Druckguss oder per Thixomolding eingebracht ist, wobei das Material vorzugsweise Aluminium ist oder dieses umfasst.

8. Rotorpaket nach einem der vorhergehenden Ansprüche, **dadurch gekennzeichnet, dass** zumindest ein Teil der Blechschnitte (B, C) ein oder mehrere Bohrungen (17) in mindestens einem Flussleitabschnitt (16, 16', 16", 16''') umfasst, wobei vorzugsweise zumindest eine Bohrung (17) in eine Flusssperre (10, 10', 10") eines benachbarten Blechschnittes (B, C) mündet.

9. Rotorpaket nach einem der vorhergehenden Ansprüche, **dadurch gekennzeichnet, dass** die Blechschnitte (B, C) keine inneren und/oder äußeren Rippen umfassen.

10. Synchronreluktanzmaschine mit einem Rotorpaket gemäß einem der vorhergehenden Ansprüche.

11. Synchronreluktanzmaschine nach Anspruch 10, **dadurch gekennzeichnet, dass** die Maschine einen Stator in Einzelspulenwicklung oder mit mehreren verteilten Wicklungen umfasst.

12. Verfahren zur Herstellung eines Rotorpaketes gemäß einem der Ansprüche 1 bis 9, **dadurch gekennzeichnet, dass** einzelne Blechschnitte (B, C) aus einem elektromagnetischen Blech geschnitten bzw. gestanzt werden, deren Flusssperren (10, 10', 10") benachbarter Polsegmente (14, 15) in alternierender radialer Richtung zueinander versetzt sind, und nachfolgend Blechschnitte (B, C) um ein oder mehrere Polsegmente (14, 15) gegenüber dem vorhergehenden Blechschnitt (B, C) des Rotorpaketes verdreht gestapelt werden.

13. Verfahren nach Anspruch 12, **dadurch gekennzeichnet, dass** ein oder mehrere Flusssperren (10, 10', 10") mit einem Füllmaterial befüllt werden, vorzugsweise per Druckgussverfahren oder per Thixomolding, wobei als Füllmaterial beispielsweise Aluminium zum Einsatz kommt.

14. Verfahren nach Anspruch 12 oder 13, **dadurch gekennzeichnet, dass** ein oder mehrere Flussleitabschnitte (16, 16', 16", 16''') ein oder mehrerer Polsegmente (14, 15) mit Bohrungen (17) versehen werden, die nachfolgend mit dem Füllmaterial befüllt werden.

## Claims

1. Rotor stack for a synchronous reluctance machine, consisting of a multiplicity of stacked laminations (B, C) having flux barriers (10, 10', 10") for forming salient rotor poles, wherein flux barriers (10, 10', 10") of adjacent laminations, said flux barriers lying on one another, form a recess which is continuous in the axial direction of the rotor, wherein, with at least some of the flux barriers (10, 10', 10") lying on one another, at least two flux barriers (10, 10', 10") of adjacent laminations (B, C) mutually overlap at least in regions,
**characterized in that**
the individual flux barriers (10, 10', 10") comprise a central part (11) running transversely with respect to the q axis and ends (12) which are preferably angled with respect to said central part, wherein the central parts (11) of flux barriers (10, 10', 10") lying on one another lie offset in the radial direction with respect to one another, wherein the ends (12) furthermore lie congruently on one another.

2. Rotor stack according to Claim 1, **characterized in that** the flux barriers (10, 10', 10") lying on one another are similar in shape and size to one another, but lie offset with respect to one another at least in regions, and therefore said flux barriers mutually overlap, wherein in particular the shape and/or size of at least one flux barrier (10, 10', 10") are/is distorted with respect to at least one adjacent flux barrier (10, 10', 10").

3. Rotor stack according to either of the preceding claims, **characterized in that** at least one lamination (B, C) lies in each case between two laminations (B, C) having two flux barriers (10, 10', 10") lying congruently on each other, said at least one lamination having an arrangement of the flux barrier (10, 10', 10") offset with respect to or overlapping said flux barriers.

4. Rotor stack according to one of the preceding claims, **characterized in that** at least one overlapping arrangement of flux barriers (10, 10', 10") of adjacent laminations (B, C) is provided at least per pole segment (14, 15), ideally overlappings are provided in the case of all of the flux barriers (10, 10', 10"), lying on one another, of a pole segment (14, 15).

5. Rotor stack according to one of the preceding claims, **characterized in that** the stack is at least partially stacked with identical laminations (B, C), wherein the flux barriers (10, 10', 10") of adjacent pole segments (14, 15) are arranged at a different radial distance from the shaft bore (13), in particular the flux barriers (10, 10', 10") of directly adjacent pole segments (14, 15), and adjacent laminations (B, C) are stacked in a manner rotated with respect to one another about one or more pole segments (14, 15).

6. Rotor stack according to one of the preceding claims, **characterized in that** at least one recess which is formed by the flux barriers (10, 10', 10") and is continuous in the axial direction is filled at least in regions with a dia-magnetic or para-magnetic material.

7. Rotor stack according to Claim 6, **characterized in that** the material is introduced by injection molding or die-casting or by thixomolding, wherein the material is preferably aluminum or comprises the latter.

8. Rotor stack according to one of the preceding claims, **characterized in that** at least some of the laminations (B, C) comprise one or more bores (17) in at least one flux-directing portion (16, 16', 16", 16'''), wherein preferably at least one bore (17) opens into a flux barrier (10, 10', 10") of an adjacent lamination (B, C).

9. Rotor stack according to one of the preceding claims, **characterized in that** the laminations (B, C) do not comprise any internal and/or external ribs.

10. Synchronous reluctance machine comprising a rotor stack according to one of the preceding claims.

11. Synchronous reluctance machine according to Claim 10, **characterized in that** the machine comprises a stator with a single coil winding or with a plurality of distributed windings.

12. Method for producing a rotor stack according to one of Claims 1 to 9, **characterized in that** individual laminations (B, C) are cut or punched from an electromagnetic sheet, the flux barriers (10, 10', 10") of the laminations of adjacent pole segments (14, 15) are offset in an alternating radial direction with respect to one another, and laminations (B, C) are subsequently stacked in a manner rotated about one or more pole segments (14, 15) in relation to the previous lamination (B, C) of the rotor stack.

13. Method according to Claim 12, **characterized in that** one or more flux barriers (10, 10', 10") are filled with a filling material, preferably by a die-casting method or by thixomolding, wherein, for example, aluminum is used as the filling material.

14. Method according to Claim 12 or 13, **characterized in that** one or more flux-directing portions (16, 16', 16", 16''') of one or more pole segments (14, 15) is or are provided with bores (17) which are subsequently filled with the filling material.

## Revendications

1. Empilage de rotor pour une machine à réluctance synchrone, composé d'une pluralité de tranches de tôle empilées (B, C) pourvues de barrages à flux (10, 10', 10") pour réaliser des pôles de rotor saillants, dans lequel des barrages à flux superposés (10, 10', 10") de tranches de tôle voisines forment un évidement continu dans le sens axial du rotor, dans lequel sur au moins une partie des barrages à flux superposés (10, 10', 10"), au moins deux barrages à flux (10, 10', 10") de tranches de tôle voisines (B, C) se chevauchent mutuellement au moins dans certaines zones,
**caractérisé en ce que** les barrages à flux individuels (10, 10', 10") comprennent une partie centrale (11) s'étendant transversalement à l'axe q et des extrémités (12), de préférence des extrémités (12) coudées par rapport à celle-ci, les parties centrales (11) de barrages à flux superposés (10, 10', 10") étant décalées les unes par rapport aux autres dans le sens radial, les extrémités (12) étant toujours superposées de manière congruente.

2. Empilage de rotor selon la revendication 1, **caractérisé en ce que** les barrages à flux superposés (10, 10', 10") sont similaires en forme et en dimension, mais sont décalés les uns par rapport aux autres au moins dans certaines zones de sorte qu'ils se chevauchent mutuellement, dans lequel en particulier la forme et/ou la dimension d'au moins un barrage à flux (10, 10', 10") sont déformées par rapport à au moins un barrage à flux voisin (10, 10', 10").

3. Empilage de rotor selon l'une quelconque des revendications précédentes, **caractérisé en ce qu'**au moins une tranche de tôle (B, C) avec un agencement du barrage à flux (10, 10', 10") décalé ou en chevauchement par rapport à celle-ci se trouve respectivement entre deux tranches de tôle (B, C) pourvues de deux barrages à flux superposés de manière congruente (10, 10', 10").

4. Empilage de rotor selon l'une quelconque des revendications précédentes, **caractérisé en ce qu'**au moins pour chaque segment de pôle (14, 15), au moins un agencement chevauchant de barrages à flux (10, 10', 10") de tranches de tôle voisines (B, C) est prévu, idéalement des chevauchements étant prévus pour tous les barrages à flux superposés (10, 10', 10") d'un segment de pôle (14, 15).

5. Empilage de rotor selon l'une quelconque des revendications précédentes, **caractérisé en ce que** l'empilage est empilé au moins partiellement à partir de tranches de tôle identiques (B, C), les barrages à flux (10, 10', 10") de segments de pôle voisins (14, 15) étant disposés avec un espacement radial différent par rapport à l'alésage d'arbre (13), en particulier les barrages à flux (10, 10', 10") de segments de pôle directement voisins (14, 15), et des tranches de tôle voisines (B, C) étant empilées autour d'un ou de plusieurs segments de pôle (14, 15) en étant tournées les unes par rapport aux autres.

6. Empilage de rotor selon l'une quelconque des revendications précédentes, **caractérisé en ce qu'**au moins un évidement continu dans le sens axial, formé par les barrages à flux (10, 10', 10"), est rempli au moins dans certaines zones d'une matière diamagnétique ou paramagnétique.

7. Empilage de rotor selon la revendication 6, **caractérisé en ce que** la matière est introduite par moulage par injection ou par moulage sous pression ou par thixomoulage, la matière étant de préférence de l'aluminium ou comprenant celui-ci.

8. Empilage de rotor selon l'une quelconque des revendications précédentes, **caractérisé en ce qu'**au moins une partie des tranches de tôle (B, C) comprend un ou plusieurs alésages (17) dans au moins une section de conduction de flux (16, 16', 16', 16'''), de préférence au moins un alésage (17) débouchant sur un barrage à flux (10, 10', 10") d'une tranche de tôle voisine (B, C).

9. Empilage de rotor selon l'une quelconque des revendications précédentes, **caractérisé en ce que** les tranches de tôle (B, C) ne comprennent pas de nervures intérieures et/ou extérieures.

10. Machine à réluctance synchrone, comprenant un empilage de rotor selon l'une quelconque des revendications précédentes.

11. Machine à réluctance synchrone selon la revendication 10, **caractérisée en ce que** la machine comprend un stator à enroulement de bobine élémentaire ou muni de plusieurs enroulements répartis.

12. Procédé de fabrication d'un empilage de rotor selon l'une quelconque des revendications 1 à 9, **caractérisé en ce que** des tranches de tôle individuelles (B, C) sont découpées ou poinçonnées dans une tôle électromagnétique, dont les barrages à flux (10, 10', 10") de segments de pôle voisins (14, 15) sont décalés les uns par rapport aux autres en alternance dans le sens radial, et ensuite, les tranches de tôle (B, C) sont empilées autour d'un ou de plusieurs segments de pôle (14, 15) en étant tournées par rapport à la tranche de tôle précédente (B, C) de l'empilage de rotor.

13. Procédé selon la revendication 12, **caractérisé en ce qu'**un ou plusieurs barrages à flux (10, 10', 10") sont remplis d'une matière de remplissage, de préférence par un procédé de moulage sous pression ou par thixomoulage, l'aluminium étant mis en œuvre par exemple comme matière de remplissage.

14. Procédé selon la revendication 12 ou 13, **caractérisé en ce qu'**une ou plusieurs tranches de conduction de flux (16, 16', 16", 16''') d'un ou de plusieurs segments de pôle (14, 15) sont munies d'alésages (17) qui sont ensuite remplis de la matière de remplissage.
